# FASCICULE DE BREVET EUROPEEN

(11) **EP 2 751 822 B1**
(45) Date de publication et mention de la délivrance du brevet: **08.11.2017**
(21) Numéro de dépôt: 12753952.6
(22) Date de dépôt: 29.08.2012
(51) Int. Cl.: H01G 9/12, H01G 11/18, H01G 11/82, H01G 11/84

(54) **ENSEMBLE DE STOCKAGE D'ÉNERGIE LONGUE DURÉE À PIÈCE DE CONNEXION INTERMÉDIAIRE**
LANGLEBIGE ENERGIESPEICHEREINRICHTUNG MIT EINER ZWISCHENVERBINDUNG
A LONG LIFE ELECTRIC ENERGY STORAGE UNIT COMPRISING AN INTER-CONNECTOR

(30) Priorité: 29.08.2011 FR 1157605
(43) Date de publication de la demande: 09.07.2014
(73) Titulaire: Blue Solutions, 29500 Ergué Gabéric (FR)
(72) Inventeur: AZAIS, Philippe, F-38120 Saint Egreve (FR); VIGNERAS, Erwan, F-29000 Quimper (FR)
(74) Mandataire: Regimbeau
(86) Numéro de dépôt international: PCT/EP2012/066733
(87) Numéro de publication internationale: WO 2013/030213

(56) Documents cités:
- WO-A1-2005/061171
- DE-A1- 4 213 651
- FR-A1- 2 921 195
- FR-A1- 2 927 729
- US-A- 3 150 300
- US-A- 3 386 014
- US-A1- 2007 084 043

## Description

La présente invention concerne le domaine technique général des ensembles de stockage d'énergie électrique.

On entend, dans le cadre de la présente invention, par « ensemble de stockage d'énergie électrique », soit un condensateur (i.e. un système passif comprenant deux électrodes et un isolant), soit un supercondensateur (i.e. un système comprenant au moins deux électrodes, un électrolyte et au moins un séparateur), soit une batterie de type batterie au lithium (i.e. un système comprenant au moins une anode, au moins une cathode et une solution d'électrolyte entre l'anode et la cathode).

### PRESENTATION GENERALE DE L'ART ANTERIEUR

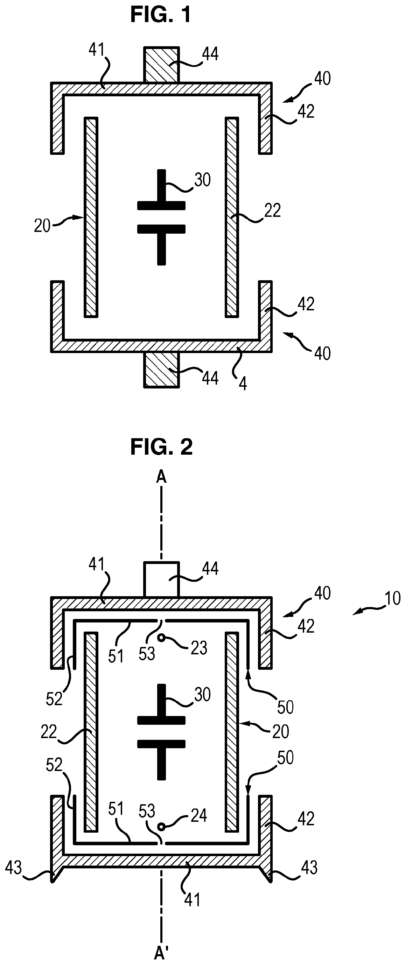

On a illustré à la figure 1 un exemple d'ensemble de stockage d'énergie du type supercondensateur tubulaire. Cet ensemble de stockage d'énergie 10 comprend une enveloppe tubulaire 20 ouverte à ses deux extrémités, un enroulement capacitif 30 et un électrolyte liquide contenus dans l'enveloppe tubulaire 20, et deux couvercles 40 destinés à coiffer les extrémités ouvertes de l'élément tubulaire 20. Chaque couvercle est connecté électriquement à l'enroulement capacitif selon des lignes de soudure s'étendant essentiellement sur toute la face visible du couvercle.

Pour souder un couvercle 40 sur l'enroulement capacitif 30, il est nécessaire de garantir un contact parfait entre le couvercle 40 et l'enroulement capacitif 30. En conséquence, une forte pression est appliquée sur le couvercle 40 durant l'étape de soudure du couvercle 40 sur l'enroulement capacitif 30.

Au cours de l'étape de soudure, la température des pièces composant l'ensemble de stockage 10 augmente, ce qui induit une dilatation de ces pièces.

A la fin de l'étape de soudure, la température des pièces composant l'ensemble de stockage 10 diminue, ce qui induit une rétractation de ces pièces.

Cette déformation des pièces - et notamment du couvercle 40 - provoque des contraintes sur les soudures, ce qui peut engendrer une diminution de la durée de vie des ensembles de stockage d'énergie 10 ainsi obtenus.

Par ailleurs, au cours de son vieillissement, la pression interne d'un ensemble de stockage d'énergie augmente du fait d'un dégagement gazeux (majoritairement de l'hydrogène) à l'intérieur de l'ensemble de stockage d'énergie.

Cette montée en pression a tendance à déformer le couvercle associé à l'ensemble de stockage d'énergie (le couvercle devient bombé), ce qui peut provoquer un arrachement des soudures entre le couvercle et l'enroulement capacitif.

L'augmentation de la pression interne d'un ensemble de stockage peut donc engendrer une diminution de sa durée de vie.

DE 42 13 651 décrit un condensateur composé d'un logement incluant un fond. Ce logement est adapté pour recevoir un enroulement capacitif sur l'extrémité duquel est fixé un couvercle. Une pièce intermédiaire est disposée entre le couvercle et l'extrémité de l'enroulement capacitif.

US 3 150 300 décrit un ensemble de stockage d'énergie comprenant un enroulement formant capacité sur les faces opposées duquel sont positionnés des couvercles.

US 3 386 014 décrit un condensateur électrolytique comprenant un logement incluant un fond. Ce logement est destiné à recevoir un enroulement capacitif. Le logement comprend un dispositif de découplage et de séparation qui peut être intégré ou non au logement.

FR 2 921 195 décrit un ensemble de stockage comprenant un boîtier, des couvercles, et un élément bobiné comportant des tranches collectrices sur ses faces opposées.

FR 2 927 729 décrit un supercondensateur incluant un élément bobiné dont l'une des faces est au moins partiellement recouverte d'une membrane perméable à l'hydrogène. La membrane est non perforée et isolante électriquement.

WO 2005/061171 décrit un ensemble de stockage d'énergie comprenant un élément fusible, un élément bobiné, et un couvercle.

Un but de la présente invention est de proposer une solution aux problèmes précités afin d'augmenter la durée de vie des ensembles de stockage d'énergie.

### PRESENTATION DE L'INVENTION

A cet effet on prévoit un ensemble de stockage d'énergie électrique comprenant une enveloppe et un élément capacitif contenu dans l'enveloppe, l'enveloppe comprenant :
o au moins une paroi latérale,
o deux parois de fond situées chacune à une extrémité de la paroi latérale,
remarquable en ce que l'ensemble de stockage comprend en outre au moins une pièce de connexion intermédiaire électriquement conductrice destinée à être disposée entre l'élément capacitif et une des parois de fond, ladite pièce de connexion intermédiaire comportant une plaque couvrante destinée à recouvrir l'extrémité de l'élément capacitif, ladite plaque couvrante incluant au moins un évent pour le passage d'un fluide, la plaque couvrante étant fixée à l'élément capacitif d'une part et à l'enveloppe d'autre part de façon à être en contact électrique avec l'élément capacitif et l'enveloppe, la pièce de connexion intermédiaire étant en contact avec l'enveloppe dans des zones de fixation où la déformation de la paroi de fond relativement à la pièce de connexion intermédiaire est minimum.

La pièce de connexion intermédiaire permet ainsi d'autoriser un gonflement de la supercapacité en cas de surpression, sans pour autant que les connexions avec l'élément capacitif ou que l'élément capacitif lui-même ne soient endommagées. En effet, puisque la pièce de connexion laisse passer les fluides, et notamment l'air, et qu'elle est reliée de façon à laisser la paroi de fond se déformer par rapport à elle, celle-ci est susceptible de rester en place même lorsque l'enveloppe se déforme.

Des aspects préférés mais non limitatifs de l'ensemble de stockage selon l'invention sont les suivants :
- la pièce de connexion intermédiaire est dépourvue (i.e. ne comprend pas) de zones de fixation dans la partie centrale de la plaque couvrante. On entend par « partie centrale » la partie de la plaque étant l'image de la plaque par une homothétie d'un rapport d'au moins 0.5, de préférence 0.8. La périphérie de la plaque est la partie de la plaque n'appartenant pas à la partie centrale,
- lesdites zones de fixation peuvent notamment comprendre une surface s'étendant à la périphérie de la plaque couvrante de la pièce de connexion intermédiaire ;
- dans un mode de réalisation particulier, la pièce intermédiaire de connexion comprend également une bordure périphérique s'étendant à la périphérie de la plaque couvrante, ladite bordure périphérique étant destinée à couvrir en partie la paroi latérale, les zones de fixation comprenant une surface s'étendant sur la bordure périphérique de la pièce de connexion intermédiaire. Ce mode de réalisation est particulièrement avantageux puisque la paroi de fond n'est absolument pas reliée à la plaque, ce qui permet de maximiser la possibilité de déformation de cette paroi de fond, sans endommager la connexion entre l'élément capacitif et l'enveloppe,
- la pièce de connexion intermédiaire est préférentiellement fixée à l'enveloppe par collage ou soudage. Elle pourrait également être fixée par brasage, vissage ou tout autre moyen de fixation,
- l'enveloppe comprend un élément tubulaire constituant la paroi latérale et au moins un couvercle placé à une extrémité de l'élément tubulaire, le couvercle comprenant une paroi couvrante destinée à recouvrir l'extrémité de l'élément tubulaire et constituant une paroi de fond de l'enveloppe,
- la pièce de connexion intermédiaire est agencée de sorte que la plaque couvrante s'étende parallèlement à un plan dans lequel s'étend la paroi couvrante du couvercle, la pièce de connexion intermédiaire étant reliée au couvercle et à l'élément tubulaire dans des zones de fixation où la déformation de la paroi couvrante du couvercle relativement à la pièce de connexion intermédiaire est minimum, et étant de préférence en contact électrique avec le couvercle. Le couvercle forme alors une borne de la supercapacité,
- l'élément tubulaire peut également comprendre un socle fermant la paroi latérale à une de ses extrémités et constituant une paroi de fond, le couvercle étant placé à l'autre de ses extrémités. Dans ce cas, la pièce de connexion intermédiaire peut être agencée de sorte que sa bordure périphérique est située à l'intérieur de la paroi latérale de l'enveloppe, la plaque couvrante s'étendant parallèlement à un plan dans lequel s'étend le socle. Les zones de fixation de la pièce de connexion intermédiaire comprennent alors de préférence une surface située sur la bordure périphérique et reliée une face interne de la paroi latérale.
- on peut également envisager qu'au moins un couvercle comprenne une jupe périphérique destinée à entourer en partie la paroi latérale de l'élément tubulaire. Dans ce cas, la pièce de connexion intermédiaire peut être agencée de sorte que sa bordure périphérique est située entre la paroi latérale et la jupe périphérique. Les zones de fixation de la pièce de connexion intermédiaire comprennent alors de préférence une surface située sur la bordure périphérique et reliée à une face interne de la jupe du couvercle et/ou à une face externe de la paroi latérale,
- dans un autre mode de réalisation, au moins un couvercle est constitué d'une paroi couvrante, notamment essentiellement plane, dimensionnée pour présenter des dimensions inférieures à celle de l'extrémité de la paroi latérale de sorte à être enfoncé dans l'enveloppe, la pièce de connexion intermédiaire étant agencée de sorte que sa plaque couvrante s'étende parallèlement à la paroi couvrante du couvercle, et que sa bordure périphérique soit située entre la périphérie de la paroi extrême et la paroi latérale. De préférence, les zones de fixation de la pièce de connexion intermédiaire comprennent une surface située sur la bordure périphérique de la pièce de connexion et reliée à la périphérie de la paroi formant le couvercle et/ou à une face interne de la paroi latérale,
- on notera que toutes les combinaisons de modes de réalisation précédemment décrits sont possibles. Par exemple, un ensemble de stockage d'énergie peut comprendre un couvercle d'un premier type et un couvercle d'un deuxième type, deux couvercles d'un même type ou un couvercle et un élément tubulaire comprenant un socle,
- l'ensemble peut comprendre deux pièces de connexion intermédiaire, située chacune à une extrémité de l'élément capacitif. Les pièces de connexion peuvent être de configuration différente et/ou reliées à une paroi de fond de types différents,
- l'ensemble peut également comprendre une première paroi de fond d'épaisseur inférieure à celle de l'autre paroi de fond, la pièce de connexion intermédiaire étant située entre l'élément capacitif et la première paroi de fond. De cette façon, on s'assure que la déformation de l'enveloppe en cas de surpression n'est prise en compte que d'un côté, celui où la paroi de fond est la plus fine. On économise alors une pièce de connexion intermédiaire tout en évitant d'endommager les connexions entre l'élément capacitif et l'enveloppe, ce qui permet également de simplifier le procédé d'assemblage de l'ensemble,
- au moins un évent consiste en une ouverture traversante ;
- la pièce de connexion intermédiaire comprend au moins une saillie s'étendant vers l'extérieur, perpendiculairement à la plaque couvrante et dans la même direction que la bordure périphérique, la saillie étant de préférence destinée à être encastrée dans l'élément capacitif ;
- chaque saillie comprend une extrémité libre recourbée ;
- la plaque couvrante est fixée directement à l'élément capacitif, au niveau de sa surface en contact avec l'élément capacitif, notamment de la bobine constituant l'élément capacitif. Dans un mode de réalisation préférentiel, les tranches des collecteurs sont soudées sur la surface de la plaque couvrante en contact avec la bobine.

L'invention concerne également un procédé d'assemblage d'un ensemble de stockage d'énergie électrique comprenant une enveloppe comportant une paroi dite latérale et deux parois de fond situées chacune à une extrémité de la paroi latérale et un élément capacitif destiné à être contenu dans l'enveloppe
remarquable en ce que le procédé comprend au moins les étapes suivantes :
- d'une part, positionner une pièce de connexion intermédiaire électriquement conductrice sur l'élément capacitif, la pièce de connexion intermédiaire comportant une plaque couvrante incluant au moins un évent pour le passage d'un fluide, la pièce de connexion intermédiaire étant positionnée de sorte que la plaque couvrante recouvre l'extrémité de l'élément capacitif, et relier la plaque couvrante à l'élément capacitif, notamment par soudage,
- d'autre part, positionner une pièce de l'enveloppe comprenant une paroi de fond de l'enveloppe, notamment un couvercle sur la pièce de connexion intermédiaire, et relier la pièce de connexion intermédiaire à la pièce de l'enveloppe, de façon à permettre une déformation de la paroi de fond relativement à la pièce de connexion intermédiaire, notamment par collage, brasage ou soudage,
- ces étapes étant effectuées de sorte que la pièce de connexion intermédiaire soit placée entre l'élément capacitif et la paroi de fond.

Les étapes précédentes du procédé peuvent être effectuées dans un ordre quelconque, le positionnement et la liaison de la pièce de connexion pouvant tout d'abord être effectué sur l'élément capacitif puis sur l'enveloppe ou l'inverse.

Le procédé peut également comprendre une étape de fixation d'une autre pièce de l'enveloppe sur l'assemblage de l'élément capacitif, de la pièce de connexion intermédiaire et de la pièce de l'enveloppe, cette autre pièce de l'enveloppe pouvant notamment être fixée directement sur la pièce de connexion intermédiaire.

L'invention concerne également un module comprenant un boîtier dans lequel sont disposés au moins deux ensembles de stockage d'énergie électrique conformes à l'ensemble de stockage d'énergie électrique décrit ci-dessus.

### PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :
- la figure 1 illustre un mode de réalisation d'un ensemble de stockage de l'art antérieur,
- la figure 2 illustre schématiquement une variante de réalisation d'un ensemble de stockage d'énergie,
- la figure 3 est une vue partielle d'un ensemble de stockage d'énergie sans pression interne,
- la figure 4 est une vue partielle d'un ensemble de stockage d'énergie avec pression interne,
- la figure 5 est une vue partielle d'une autre variante de réalisation d'un ensemble de stockage d'énergie,
- la figure 6 est une vue en coupe d'un ensemble selon un autre mode de réalisation de l'invention,
- la figure 7 illustre un exemple de procédé d'assemblage d'un ensemble de stockage d'énergie.

### DESCRIPTION DE L'INVENTION

On va maintenant décrire différents modes de réalisation de l'ensemble de stockage selon l'invention en référence aux figures. Dans ces différentes figures, les éléments équivalents de l'ensemble de stockage portent les mêmes références numériques.

Comme illustré à la figure 2, l'ensemble de stockage 10 comprend une enveloppe comprenant notamment un élément tubulaire 20 et deux couvercles 40, et un élément capacitif 30 dans l'élément tubulaire 20.

L'ensemble de stockage 10 est de forme globalement cylindrique. Dans d'autres variantes non représentées ici, l'ensemble de stockage peut être de forme parallélépipédique, cubique, ovale, hexagonale, sans que cela change les principes généraux de l'invention.

L'élément tubulaire 20 peut être ouvert à ses deux extrémités, ou comprendre un socle. Dans le mode de réalisation illustré à la figure 2, chaque élément tubulaire 20 comprend une paroi latérale 22, formant la paroi latérale de l'enveloppe, et deux ouvertures sur ses extrémités supérieure et inférieure. L'élément tubulaire 20 peut présenter une section carrée, ovale, hexagonale, circulaire ou tout autre type de section connue de l'homme du métier.

Le matériau constituant l'élément tubulaire 20 peut être isolant électriquement - par exemple un plastique - ou conducteur électriquement - par exemple un métal tel que de l'aluminium, de l'acier inoxydable, etc.

Chaque face ouverte de l'élément tubulaire 20 est coiffée par un couvercle 40.

Le couvercle 40 est électriquement conducteur. Le matériau constituant le couvercle 40 est par exemple un métal tel que de l'aluminium, de l'acier inoxydable, etc.

Chaque couvercle 40 est composé :
∘ d'une paroi couvrante 41, formant une paroi de fond de l'ensemble et destinée à recouvrir la face supérieure 23 (respectivement la face inférieure 24) de l'ensemble de stockage 10, et
∘ d'une jupe périphérique 42 s'étendant perpendiculairement à la paroi couvrante 41, la jupe périphérique 42 étant destinée à entourer en partie la paroi latérale 22 de l'élément tubulaire 20.

Chaque couvercle 40 peut ou non comprendre un bord périphérique 43 s'étendant vers l'extérieur parallèlement à l'axe de révolution A-A' de l'ensemble de stockage 10 sur sa face opposée à la jupe périphérique 42. On notera que le bord périphérique de chaque couvercle est bien entendu optionnel.

Chaque couvercle 40 peut ou non comprendre une borne de connexion 44 destinée à recevoir une barrette de connexion (non représentée) pour la connexion électrique de l'ensemble de stockage 10 à un ensemble de stockage adjacent.

Avantageusement, l'ensemble de stockage 10 comprend également une pièce de connexion intermédiaire 50 électriquement conductrice. La pièce de connexion intermédiaire 50 permet de garantir le passage du courant entre l'élément capacitif 30 et le couvercle 40.

La pièce de connexion intermédiaire 50 comporte une plaque couvrante 51 et une bordure périphérique 52.

La plaque couvrante 51 s'étend sensiblement dans un plan. Cette plaque couvrante 51 est destinée à recouvrir l'extrémité ouverte de l'élément tubulaire 20.

La bordure périphérique 52 s'étend à la périphérie de la plaque couvrante 51, perpendiculairement à la plaque couvrante 51. Cette bordure périphérique 52 est destinée à recouvrir en partie la face latérale 22 de l'élément tubulaire 20.

La pièce de connexion intermédiaire 50 est destinée à être disposée entre l'élément tubulaire 20 et le couvercle 40 de sorte que :
- la paroi couvrante 41 du couvercle 40 recouvre la plaque couvrante 51 de la pièce intermédiaire, la paroi couvrante 41 s'étendant parallèlement à la plaque couvrante 51, et
- la jupe périphérique 42 du couvercle 40 recouvre la bordure périphérique 52 de la pièce intermédiaire de connexion 50, la jupe périphérique 42 s'étendant parallèlement à la bordure périphérique 52.

Une fois l'ensemble de stockage 10 assemblé, la pièce de connexion intermédiaire 50 est en contact électrique avec l'élément capacitif 30 d'une part, et avec le couvercle 50 d'autre part.

En effet, la pièce de connexion intermédiaire 50 est fixée à l'élément capacitif 30 au niveau de la plaque couvrante 51. Elle est également fixée au couvercle dans une zone permettant d'autoriser une déformation de la paroi couvrante du couvercle, formant paroi de fond de l'ensemble, relativement à la pièce de connexion, notamment en périphérie de la plaque couvrante 51 ou sur la jupe 52.

La plaque couvrante 51 comprend également un évent 53 pour le passage d'un fluide. Ceci permet d'éviter que la pièce de connexion intermédiaire 50 ne soit affectée par l'augmentation de pression interne de l'ensemble de stockage d'énergie 10 au cours de son vieillissement, puisque le gonflement du couvercle est autorisé sans que celui-ci n'endommage la liaison électrique entre le couvercle et l'élément capacitif.

En reportant le passage du courant sur une pièce de connexion intermédiaire 50 dont les déformations sont limitées grâce à la présence d'un évent 53, la durée de vie de l'ensemble de stockage d'énergie 10 est améliorée.

En effet, les risques de déconnexion liés à la montée en pression interne de l'ensemble de stockage d'énergie 10 sont réduits, la pièce de connexion intermédiaire 50 étant peu soumise à la pression interne de l'ensemble de stockage d'énergie 10.

La présence d'une pièce de connexion intermédiaire présente de nombreux avantages.

Notamment, dans le cas des ensembles de stockage de l'art antérieur, les couvercles 40 étaient fixés sur l'élément capacitif 30 en utilisant une technique de soudure par transparence. On entend par soudage par laser transparence, le fait de souder deux pièces superposées, par un faisceau d'énergie traversant l'unes des pièces à souder - soit au travers d'une partie amincie de celle-ci, si la pièce est épaisse, soit au travers de toute son épaisseur, si la pièce est mince.

Ceci induisait de nombreuses contraintes sur les couvercles. Notamment, les couvercles devaient présenter une épaisseur constante et être plan.

Par ailleurs, il était souvent prévu une zone amincie sur ces couvercles, zone au niveau de laquelle était réalisée la soudure par transparence du couvercle sur l'élément capacitif.

Enfin, le matériau constituant le couvercle était choisi de sorte à être compatible avec l'opération de soudure par transparence.

La présence de la pièce de connexion intermédiaire permet de supprimer cette étape de soudure par transparence, opération particulièrement délicate notamment à cause des différences d'épaisseurs entre le couvercle 40 et l'élément capacitif 30.

L'assemblage de l'ensemble de stockage 10 ne nécessitant plus d'étape de soudure du couvercle 40 sur l'élément capacitif 30, il est possible de :
- supprimer les zones amincies du couvercle,
- diminuer les contraintes d'épaisseur constante et de planéité du couvercle,
- élargir le choix des aluminiums constituant le couvercle vers des alliages plus mécanique tel que des aluminiums de séries 3000 (à base de Manganèse) ou 6000 (à base de magnésium et de silicium), ou encore de l'acier inoxydable, du nickel, ou tout autre métal ne corrodant pas en milieu aqueux.

La pièce de connexion intermédiaire 50 peut être fixée au couvercle 40 dans des zones où l'amplitude de déformation est minimum, par exemple à la périphérie du couvercle 40. Ceci permet de garantir un bon contact électrique entre la pièce de connexion intermédiaire 50, le couvercle 40, même lorsque la pression interne de l'ensemble de stockage 10 augmente.

La pièce de connexion intermédiaire 50 peut être fixée sur l'élément capacitif 30 par soudure.

Avantageusement, l'épaisseur de la pièce de connexion intermédiaire 50 peut être proche de celle de l'élément capacitif 30, par exemple de l'ordre de 1 millimètre d'épaisseur.

Ceci permet de :
- diminuer la puissance du faisceau laser utilisé pour la soudure de la pièce de connexion intermédiaire 50 sur l'élément capacitif 30 ;
- d'augmenter la vitesse de soudure de la pièce de connexion intermédiaire 50 sur l'élément capacitif 30 ;
- de diminuer l'échauffement de l'élément capacitif 30, et donc de diminuer le risque de détériorer celui-ci (par exemple diminution du risque de dégradation des polymères et du séparateur constituant l'élément capacitif) ;
- d'élargir les cordons de soudure entre la pièce de connexion intermédiaire 50 et l'élément capacitif 30, ce qui améliore le passage du courant ;
- de souder les spires extérieures de l'élément capacitif 30 (dans le cas où celui-ci est un enroulement capacitif).

La pièce de connexion intermédiaire 50 peut également être fixée sur l'élément capacitif 30 par brasage ou par brasage diffusion puisque celle-ci n'a pas besoin d'être étanche et n'est pas soumise aux contraintes mécaniques (notamment augmentation de la pression interne de l'ensemble de stockage).

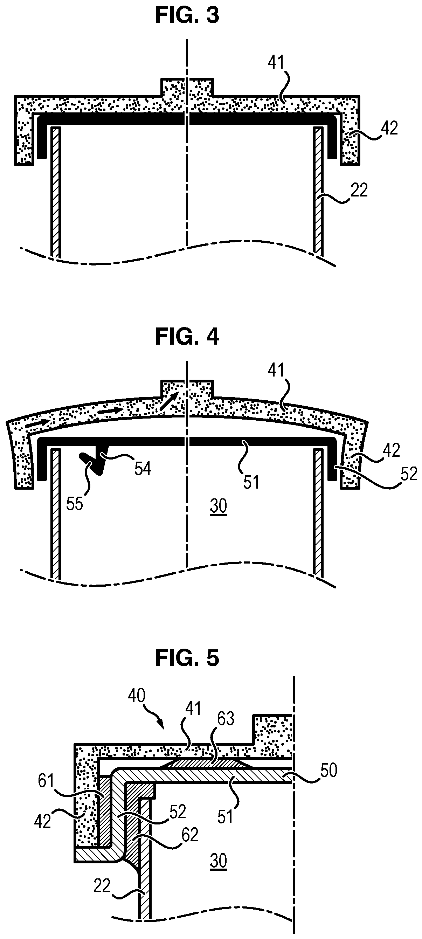

Enfin, la pièce de connexion intermédiaire peut être fixée mécaniquement sur l'élément capacitif 30, comme illustré à la figure 4.

Dans ce mode de réalisation, la pièce de connexion intermédiaire comprend au moins une saillie 54 s'étendant perpendiculaire à la plaque couvrante 51, dans la même direction que la bordure périphérique 52. L'extrémité libre 55 de la saillie 54 peut être recourbée pour faciliter son ancrage dans l'élément capacitif 30.

Le lecteur appréciera que la fixation de la pièce intermédiaire de connexion sur l'élément capacitif puisse combiner les trois techniques de fixation (soudage, brasage, mécanique) précitées.

En ce qui concerne la fixation de la pièce de connexion intermédiaire 50 sur le couvercle 40, celle-ci peut être réalisée par soudage ou par collage.

On a illustré à la figure 5 un mode de réalisation de l'ensemble de stockage d'énergie 10 dans lequel la pièce de connexion intermédiaire 50 est fixée par collage sur le couvercle 40 et l'élément tubulaire 20.

Le fait de coller le couvercle 40 et la pièce intermédiaire de connexion 50 permet d'améliorer la tenue à la pression de l'ensemble de stockage. Il est donc possible de diminuer l'épaisseur du couvercle 40.

L'ensemble de stockage comprend trois dépôts de colle 61, 62, 63. Un premier dépôt de colle 61 s'étend entre la jupe périphérique 42 du couvercle 40 et la bordure périphérique 52 de la pièce intermédiaire de connexion 50. Un deuxième dépôt de colle 62 s'étend entre la bordure périphérique et la paroi latérale 22 de l'élément tubulaire 20. Les dépôts 61, 62 sont préférentiellement des cordons de colle continus qui permettent d'assurer l'étanchéité de la supercapacité.

Ainsi, la pièce de connexion intermédiaire 50 est fixée :
- au couvercle selon une surface de normale radiale au couvercle, et
- à l'élément tubulaire selon une surface de normale radiale au couvercle.

Un troisième dépôt de colle 63 s'étend entre la paroi couvrante 41 du couvercle 40 et la plaque couvrante 51 de la pièce de connexion intermédiaire 50, de préférence à la périphérie de la paroi couvrante, cette zone étant peu soumise à la montée en pression. Le dépôt 63 peut être un plot de colle car il n'intervient pas dans l'étanchéité de la supercapacité. Ceci permet de limiter les contraintes de dilatation axiale subies par la pièce de connexion intermédiaire 50, et, du même coup, par l'élément capacitif, tout en assurant une bonne étanchéité de l'ensemble.

On notera que la fixation de la pièce intermédiaire avec les différents autres éléments peut être effectuée différemment. On peut par exemple envisager une soudure de la pièce intermédiaire avec le couvercle entre les extrémités radiales du couvercle 42 et de la pièce intermédiaire.

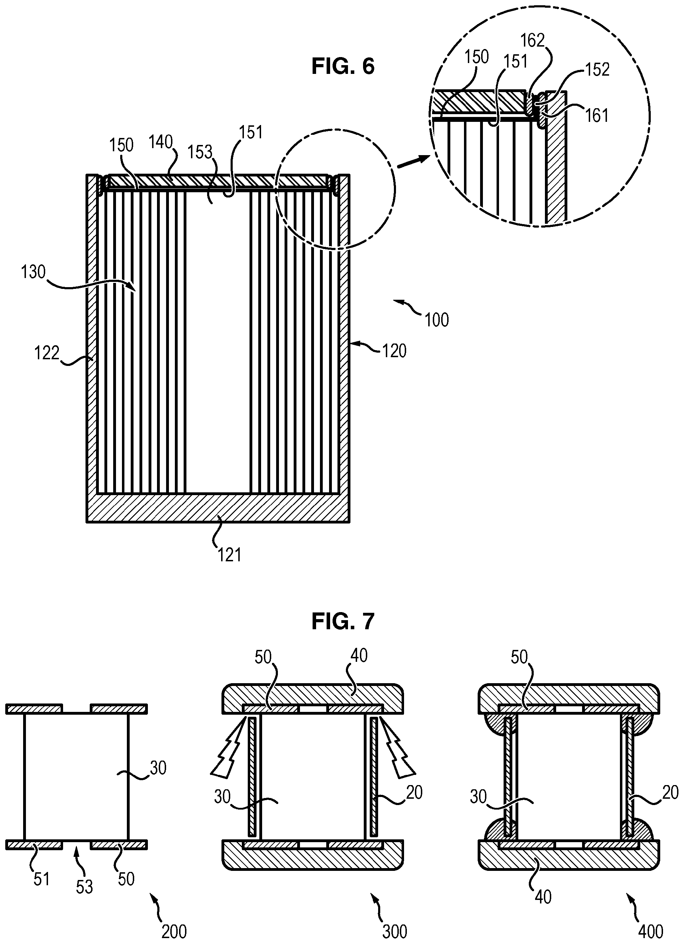

En référence à la figure 6, on a illustré un autre mode de réalisation de l'invention. On a représenté à la figure 6 une supercapacité 100 comprenant une enveloppe composée d'un élément tubulaire 120, comprenant un socle 121 formant une paroi de fond de l'enveloppe, et une paroi latérale cylindrique 122, et un couvercle 140 placé à une extrémité ouverte de l'élément tubulaire 120 et formant une autre paroi de fond de l'enveloppe. La supercapacité 100 comprend également un élément capacitif bobiné 130 contenu dans l'enveloppe avec une électrolyte.

Dans ce mode de réalisation, le couvercle 140 est constitué d'un disque essentiellement plan et de diamètre légèrement inférieur à celui de la paroi latérale 122 de l'élément tubulaire. Le couvercle est destiné à être inséré dans l'élément tubulaire et à affleurer avec l'extrémité de l'élément tubulaire.

L'ensemble comprend également une pièce de connexion intermédiaire 150 située entre le couvercle formant paroi de fond et l'élément capacitif 130.

Cette pièce de connexion intermédiaire comprend une plaque couvrante 151 destinée à être placée parallèlement au couvercle 140 et une bordure périphérique 152 s'étendant à l'extrémité de la plaque couvrante 151. La bordure périphérique est destinée à longer la paroi latérale 122 de l'élément tubulaire et la pièce de connexion intermédiaire est configurée de sorte que la bordure périphérique soit intercalée entre la paroi latérale 122 et l'extrémité du couvercle 140.

La pièce de connexion intermédiaire 150 comprend également un évent 153 permettant le passage des fluides

L'élément capacitif est relié par soudage d'une part au socle 121 de l'élément tubulaire 120 et, d'autre part, à la pièce de connexion intermédiaire 150, au niveau de la plaque couvrante 151.

La pièce de connexion 150 est également reliée par collage à l'élément tubulaire 120, au niveau de sa bordure périphérique, à l'aide de dépôts de colle 161 pour relier l'élément tubulaire à la pièce de connexion intermédiaire et par soudage au couvercle. Cette liaison par soudure 162 permet d'obtenir une liaison électriquement conductrice pour connecter électriquement le couvercle à l'élément capacitif.

De cette façon, en cas de surpression dans l'enveloppe, les gaz présents dans la supercapacité traversent la pièce de connexion intermédiaire 150 par l'évent 153 et viennent gonfler le couvercle 140. La connexion électrique entre le couvercle et l'élément capacitif n'est pas endommagée puisque la surpression n'a pas d'effet sur la liaison entre la pièce de connexion intermédiaire 150 et l'élément capacitif 130 du fait de la présence de l'évent et que le gonflement du couvercle 140 n'endommage pas la liaison entre la pièce de connexion intermédiaire et le couvercle, les contraintes dues au gonflement étant peu importantes en périphérie du couvercle.

On remarquera que, dans ce mode de réalisation, la supercapacité ne comprend qu'une seule pièce de connexion intermédiaire. En effet, comme le socle 121 est beaucoup plus épais que le couvercle 140, celui-ci ne se déforme pas en cas de surpression et il n'est pas nécessaire de prévoir une pièce de connexion intermédiaire entre celui-ci et l'élément capacitif. Une telle pièce de connexion peut également être placée au voisinage d'un socle d'élément tubulaire.

En référence à la figure 7, on a également illustré un exemple de procédé d'assemblage d'un ensemble de stockage selon l'invention.

Dans le cas où l'élément tubulaire 120 ne comprend pas de socle, une pièce de connexion intermédiaire 50 est disposée sur chacune des extrémités de l'élément capacitif 130 (étape 200). La pièce de connexion intermédiaire 50 est positionnée de sorte que la plaque couvrante 51 coiffe l'extrémité de l'élément capacitif 130. Dans ce mode de réalisation, la pièce de connexion intermédiaire ne comprend pas de bordure périphérique. La pièce de connexion intermédiaire 50 est alors fixée sur l'élément capacitif 30 par soudage, par brasage ou par fixation mécanique dans la partie centrale de la plaque couvrante.

Un couvercle 40 est ensuite superposé sur chaque pièce de connexion intermédiaire 50 (étape 300). L'élément tubulaire est également mis en place autour de l'élément capacitif. Le couvercle 40 est fixé à la pièce de connexion intermédiaire 50 par collage, par soudage ou par emboitement à force du couvercle 40 sur la pièce de connexion intermédiaire 50, à la périphérie de la plaque couvrante.

Ensuite, on entreprend la fixation de l'élément tubulaire 20 relativement au couvercle, notamment par l'intermédiaire de la coupelle collectrice (étape 400). Cette fixation est notamment effectuée par collage et permet d'assurer l'étanchéité de l'ensemble.

On effectue généralement ensuite l'imprégnation de l'ensemble en amenant l'électrolyte à l'intérieur de l'enveloppe grâce à une ouverture ménagée dans le couvercle.

On obtient ainsi un ensemble de stockage d'énergie électrique.

Le lecteur aura compris que de nombreuses modifications peuvent être apportées au procédé et au dispositif décrit précédemment sans sortir matériellement des nouveaux enseignements et des avantages décrits ici.

Notamment, l'élément capacitif peut être un élément bobiné, enroulé ou superposé (ou « *stacked »* selon l'expression anglo-saxonne). Il peut être de forme cylindrique, prismatique ou de toute autre forme connu de l'homme du métier.

En outre, durant le procédé, on notera notamment que la pièce de connexion intermédiaire peut d'abord être assemblée sur le couvercle (ou le socle de l'élément tubulaire) puis ensuite sur l'élément capacitif.

Par conséquent, toutes les modifications de ce type entrent dans la portée du module selon l'invention tel que défini dans les revendications jointes.

## Revendications

1. Ensemble de stockage d'énergie électrique (10; 100) comprenant une enveloppe et un élément capacitif (30; 130) contenu dans l'enveloppe, l'enveloppe comprenant :
∘ au moins une paroi latérale (22 ; 122),
∘ deux parois de fond (41 ; 121, 140) situées chacune à une extrémité de la paroi latérale,
**caractérisé en ce que** l'ensemble de stockage comprend en outre au moins une pièce de connexion intermédiaire (50) électriquement conductrice destinée à être disposée entre l'élément capacitif et une des parois de fond (41 ; 140), ladite pièce de connexion intermédiaire (50 ; 150) comportant une plaque couvrante (51 ; 151) destinée à recouvrir l'extrémité de l'élément capacitif (20), ladite plaque couvrante (51 ; 151) incluant au moins un évent (53 ; 153) pour le passage d'un fluide, la plaque couvrante (51 ; 151) étant fixée à l'élément capacitif d'une part et à l'enveloppe d'autre part de façon à être en contact électrique avec l'élément capacitif et l'enveloppe, la pièce de connexion intermédiaire étant en contact avec l'enveloppe dans des zones de fixation où la déformation de la paroi de fond relativement à la pièce de connexion intermédiaire est minimum.

2. Ensemble de stockage selon la revendication précédente, dans lequel la pièce de connexion intermédiaire (50 ; 150) est dépourvue de zones de fixation dans la partie centrale de la plaque couvrante (51 ; 151).

3. Ensemble de stockage selon l'une des revendications 1 ou 2, dans lequel lesdites zones de fixation comprennent une surface s'étendant à la périphérie de la plaque couvrante (51) de la pièce de connexion intermédiaire.

4. Ensemble de stockage selon la revendication 3, dans lequel la pièce intermédiaire de connexion (50; 150) comprend également une bordure périphérique (52; 152) s'étendant à la périphérie de la plaque couvrante, ladite bordure périphérique étant destinée à couvrir en partie la paroi latérale (22 ; 122), les zones de fixation comprenant une surface s'étendant sur la bordure périphérique de la pièce de connexion intermédiaire.

5. Ensemble de stockage d'énergie selon l'une quelconque des revendications 1 à 4, dans lequel la pièce de connexion intermédiaire (50 ; 150) est fixée à l'enveloppe (40) par collage ou par soudage.

6. Ensemble de stockage selon l'une quelconque des revendications 1 à 5, dans lequel l'enveloppe comprend un élément tubulaire (20; 120) constituant la paroi latérale et au moins un couvercle (40; 140) placé à une extrémité de l'élément tubulaire, le couvercle comprenant une paroi couvrante (41 ; 140) destinée à recouvrir l'extrémité de l'élément tubulaire et constituant une paroi de fond de l'enveloppe.

7. Ensemble de stockage selon la revendication 6, dans lequel la pièce de connexion intermédiaire est agencée de sorte que la plaque couvrante (51 ; 151) s'étende parallèlement à un plan dans lequel s'étend la paroi couvrante (41 ; 140) du couvercle, la pièce de connexion intermédiaire étant reliée au couvercle et à l'élément tubulaire dans des zones de fixation où la déformation de la paroi couvrante (41, 140) du couvercle relativement à la pièce de connexion intermédiaire est minimum, et étant de préférence en contact électrique avec le couvercle.

8. Ensemble de stockage selon l'une quelconque des revendications 6 ou 7, dans lequel l'élément tubulaire (120) comprend un socle (121) fermant la paroi latérale à une de ses extrémités et constituant une paroi de fond, le couvercle (140) étant placé à l'autre de ses extrémités.

9. Ensemble de stockage selon la revendication 8, dans lequel la pièce de connexion intermédiaire est agencée à l'intérieur de la paroi latérale de l'enveloppe, la plaque couvrante s'étendant parallèlement à un plan dans lequel s'étend le socle, les zones de fixation de la pièce de connexion intermédiaire comprenant de préférence une surface située sur la bordure périphérique et reliée à une face interne de la paroi latérale.

10. Ensemble de stockage selon l'une quelconque des revendications 6 à 9, dans lequel au moins un couvercle comprend une jupe périphérique (42) destinée à entourer en partie la paroi latérale de l'élément tubulaire.

11. Ensemble de stockage selon la revendication 10, dans lequel la pièce de connexion intermédiaire est agencée de sorte que sa bordure périphérique (52) est située entre la paroi latérale (22) et la jupe périphérique (52), les zones de fixation de la pièce de connexion intermédiaire comprenant de préférence une surface située sur la bordure périphérique et reliée à une face interne de la jupe du couvercle et/ou à une face externe de la paroi latérale.

12. Ensemble de stockage selon l'une quelconque des revendications 6 à 11, dans lequel au moins un couvercle (140) comprend une paroi couvrante dimensionnée pour présenter des dimensions inférieures à celle de l'extrémité de la paroi latérale (122) de sorte à être enfoncé dans l'enveloppe, la pièce de connexion intermédiaire (150) étant agencée de sorte que sa plaque couvrante s'étend parallèlement à la paroi couvrante du couvercle, et que sa bordure périphérique est située entre un bord du couvercle s'étendant perpendiculairement à la paroi couvrante (140) et la paroi latérale (122) de l'enveloppe, les zones de fixation de la pièce de connexion intermédiaire (150) comprenant de préférence une surface située sur la bordure périphérique de la pièce de connexion.

13. Ensemble de stockage selon l'une quelconque des revendications 1 à 12, comprenant deux pièces de connexion intermédiaire (50), située chacune à une extrémité de l'élément capacitif (30).

14. Ensemble de stockage selon l'une quelconque des revendications 1 à 12, dans lequel l'une des parois de fond (140) a une épaisseur inférieure à l'autre des parois de fond (121), la pièce de connexion intermédiaire étant située entre l'élément capacitif et ladite paroi de fond ayant une épaisseur inférieure.

15. Ensemble de stockage selon l'une quelconque des revendications précédentes, dans lequel au moins un évent (53; 153) consiste en une ouverture traversante.

16. Ensemble de stockage d'énergie selon l'une quelconque des revendications précédentes, dans lequel la pièce de connexion intermédiaire comprend au moins une saillie (54) s'étendant vers l'extérieur, perpendiculairement à la plaque couvrante (51) et dans la même direction que la bordure périphérique, cette saillie étant de préférence destinée à être encastrée dans l'élément capacitif.

17. Procédé d'assemblage d'un ensemble de stockage d'énergie électrique comprenant une enveloppe comportant une paroi dite latérale (22) et deux parois de fond situées chacune à une extrémité de la paroi latérale et un élément capacitif destiné à être contenu dans l'enveloppe **caractérisé en ce que** le procédé comprend au moins les étapes suivantes :
- d'une part, positionner (200) une pièce de connexion intermédiaire (50) électriquement conductrice sur l'élément capacitif, la pièce de connexion intermédiaire (50) comportant une plaque couvrante (51) incluant au moins un évent (53) pour le passage d'un fluide, la pièce de connexion intermédiaire étant positionnée de sorte que la plaque couvrante (51) recouvre l'extrémité de l'élément capacitif, et relier la plaque couvrante à l'élément capacitif, notamment par soudage,
- d'autre part, positionner (300) une pièce de l'enveloppe comprenant une paroi de fond de l'enveloppe, notamment un couvercle (40) sur la pièce de connexion intermédiaire (50), et relier la pièce de connexion intermédiaire à la pièce de l'enveloppe, de façon à permettre une déformation de la paroi de fond (40) relativement à la pièce de connexion intermédiaire, notamment par collage, brasage ou soudage,
ces étapes étant effectuées de sorte que la pièce de connexion intermédiaire soit placée entre l'élément capacitif et la paroi de fond.

18. Module comprenant un boîtier dans lequel sont disposés au moins deux ensembles de stockage d'énergie électrique selon l'une des revendications 1 à 16.

## Patentansprüche

1. Elektrische Energiespeichervorrichtung (10; 100), die eine Umhüllung und ein kapazitives Element (30; 130) umfasst, das in der Umhüllung enthalten ist, wobei die Umhüllung Folgendes umfasst:
∘ mindestens eine Seitenwand (22; 122),
∘ zwei Rückwände (41; 121, 140), die sich jeweils an einem Ende der Seitenwand befinden,
**dadurch gekennzeichnet, dass** die Speichervorrichtung ferner mindestens ein elektrisch leitfähiges Zwischenverbindungsteil (50) umfasst, das dazu bestimmt ist, zwischen dem kapazitiven Element und einer der Rückwände (41; 140) angeordnet zu werden, wobei das Zwischenverbindungsteil (50; 150) eine Abdeckplatte (51; 151) umfasst, die dazu bestimmt ist, das Ende des kapazitiven Elements (20) abzudecken, wobei die Abdeckplatte (51; 151) mindestens ein Luftloch (53; 153) für den Durchgang eines Fluides umfasst, wobei die Abdeckplatte (51; 151) derart einerseits an dem kapazitiven Element und andererseits an der Umhüllung befestigt ist, dass es sich in elektrischem Kontakt mit dem kapazitiven Element und der Umhüllung befindet, wobei das Zwischenverbindungsteil in Befestigungszonen, wo die Verformung der Rückwand in Bezug auf das Zwischenverbindungsteil minimal ist, im Kontakt mit der Umhüllung ist.

2. Speichervorrichtung nach dem vorhergehenden Anspruch, wobei das Zwischenverbindungsteil (50; 150) keine Befestigungszonen im mittleren Teil der Abdeckplatte (51; 151) aufweist.

3. Speichervorrichtung nach einem der Ansprüche 1 oder 2, wobei die Befestigungszonen eine Fläche umfassen, die sich am Umfang der Abdeckplatte (51) des Zwischenverbindungsteils erstreckt.

4. Speichervorrichtung nach Anspruch 3, wobei das Zwischenverbindungsteil (50; 150) auch einen umlaufenden Rand (52; 152) umfasst, der sich am Umfang der Abdeckplatte erstreckt, wobei der umlaufende Rand dazu bestimmt ist, die Seitenwand (22; 122) teilweise abzudecken, wobei die Befestigungszonen eine Fläche umfassen, die sich über den umlaufenden Rand des Zwischenverbindungsteils erstreckt.

5. Energiespeichervorrichtung nach einem der Ansprüche 1 bis 4, wobei das Zwischenverbindungsteil (50; 150) durch Kleben oder durch Schweißen an der Umhüllung (40) befestigt ist.

6. Speichervorrichtung nach einem der Ansprüche 1 bis 5, wobei die Umhüllung ein röhrenförmiges Element (20; 120), das die Seitenwand bildet, und mindestens eine Abdeckung (40; 140) umfasst, die an einem Ende des röhrenförmigen Elements platziert ist, wobei die Abdeckung eine Abdeckwand (41; 140) umfasst, die dazu bestimmt ist, das Ende des röhrenförmigen Elements abzudecken, und eine Rückwand der Umhüllung bildet.

7. Speichervorrichtung nach Anspruch 6, wobei das Zwischenverbindungsteil derart angeordnet ist, dass die Abdeckplatte (51; 151) sich parallel zu einer Ebene erstreckt, in der sich die Abdeckwand (41; 140) der Abdeckung erstreckt, wobei das Zwischenverbindungsteil mit der Abdeckung und mit dem röhrenförmigen Element in Befestigungszonen verbunden ist, wo die Verformung der Abdeckwand (41, 140) der Abdeckung in Bezug auf das Zwischenverbindungsteil minimal ist, und vorzugsweise mit der Abdeckung in elektrischem Kontakt steht.

8. Speichervorrichtung nach einem der Ansprüche 6 oder 7, wobei das röhrenförmige Element (120) einen Sockel (121) umfasst, der die Seitenwand an einem ihrer Enden schließt und eine Rückwand bildet, wobei die Abdeckung (140) auf dem anderen ihrer Enden platziert ist.

9. Speichervorrichtung nach Anspruch 8, wobei das Zwischenverbindungsteil im Inneren der Seitenwand der Umhüllung angeordnet ist, wobei die Abdeckplatte sich parallel zu einer Ebene erstreckt, in der sich der Sockel erstreckt, wobei die Befestigungszonen des Zwischenverbindungsteils vorzugsweise eine Fläche umfassen, die sich auf dem umlaufenden Rand befindet und mit einer Innenfläche der Seitenwand verbunden ist.

10. Speichervorrichtung nach einem der Ansprüche 6 bis 9, wobei mindestens eine Abdeckung eine umlaufende Schürze (42) umfasst, die dazu bestimmt ist, die Seitenwand des röhrenförmigen Elements teilweise zu umgeben.

11. Speichervorrichtung nach Anspruch 10, wobei das Zwischenverbindungsteil derart angeordnet ist, dass sein umlaufender Rand (52) sich zwischen der Seitenwand (22) und der umlaufenden Schürze (52) befindet, wobei die Befestigungszonen des Zwischenverbindungsteils vorzugsweise eine Fläche umfassen, die sich auf dem umlaufenden Rand befindet und mit einer Innenfläche der Schürze der Abdeckung und/oder einer Außenfläche der Seitenwand verbunden ist.

12. Speichervorrichtung nach einem der Ansprüche 6 bis 11, wobei mindestens eine Abdeckung (140) eine Abdeckwand umfasst, die bemessen ist, um Abmessungen aufzuweisen, die kleiner als diejenigen des Endes der Seitenwand (122) sind, derart, dass sie in die Umhüllung eingepresst wird, wobei das Zwischenverbindungsteil (150) derart angeordnet ist, dass ihre Abdeckplatte sich parallel zur Abdeckwand der Abdeckung erstreckt, und dass ihr umlaufender Rand sich zwischen einem Rand der Abdeckung, der sich senkrecht zur Abdeckwand (140) erstreckt, und der Seitenwand (122) der Umhüllung befindet, wobei die Befestigungszonen des Zwischenverbindungsteils (150) vorzugsweise eine Fläche umfassen, die sich auf dem umlaufenden Rand des Verbindungsteils befindet.

13. Speichervorrichtung nach einem der Ansprüche 1 bis 12, die zwei Zwischenverbindungsteile (50) umfasst, die sich jeweils an einem Ende des kapazitiven Elements (30) befinden.

14. Speichervorrichtung nach einem der Ansprüche 1 bis 12, wobei eine der Rückwände (140) eine Dicke aufweist, die kleiner als diejenige der anderen von den Rückwänden (121) ist, wobei das Zwischenverbindungsteil sich zwischen dem kapazitiven Element und der Rückwand befindet, die eine kleinere Dicke aufweist.

15. Speichervorrichtung nach einem der vorhergehenden Ansprüche, wobei mindestens ein Luftloch (53; 153) aus einer durchgehenden Öffnung besteht.

16. Energiespeichervorrichtung nach einem der vorhergehenden Ansprüche, wobei das Zwischenverbindungsteil mindestens einen Vorsprung (54) umfasst, der sich nach außen, senkrecht zur Abdeckplatte (51) und in die gleiche Richtung wie der umlaufende Rand erstreckt, wobei dieser Vorsprung vorzugsweise dazu bestimmt ist, in das kapazitive Element eingelassen zu werden.

17. Verfahren zum Zusammenbauen einer elektrischen Energiespeichervorrichtung, die eine Umhüllung, die eine Seitenwand (22) und zwei Rückwände umfasst, die sich jeweils an einem Ende der Seitenwand befinden, und ein kapazitives Element umfasst, das dazu bestimmt ist, in der Umhüllung enthalten zu sein, **dadurch gekennzeichnet, dass** das Verfahren mindestens die folgenden Schritte umfasst:
- einerseits Positionieren (200) eines elektrisch leitfähigen Zwischenverbindungsteils (50) auf dem kapazitiven Element, wobei das Zwischenverbindungsteil (50) eine Abdeckplatte (51) umfasst, die mindestens ein Luftloch (53) für den Durchgang eines Fluides umfasst, wobei das Zwischenverbindungsteil derart positioniert ist, dass die Abdeckplatte (51) das Ende des kapazitiven Elements abdeckt, und Verbinden der Abdeckplatte mit dem kapazitiven Element, insbesondere durch Schweißen,
- andererseits Positionieren (300) eines Teils der Umhüllung, der eine Rückwand der Umhüllung umfasst, insbesondere einer Abdeckung (40), auf dem Zwischenverbindungsteil (50), und Verbinden des Zwischenverbindungsteils mit dem Teil der Umhüllung, derart, dass eine Verformung der Rückwand (40) in Bezug zum Zwischenverbindungsteil ermöglicht wird, insbesondere durch Kleben, Löten oder Schweißen,
wobei diese Schritte derart durchgeführt werden, dass das Zwischenverbindungsteil zwischen dem kapazitiven Element und der Rückwand platziert wird.

18. Modul, das ein Gehäuse umfasst, in dem mindestens zwei elektrische Energiespeichervorrichtungen nach einem der Ansprüche 1 bis 16 angeordnet sind.

## Claims

1. An electrical energy storage assembly (10; 100) comprising an envelope and a capacitive element (30; 130) contained in the envelope, the envelope comprising:
• at least one side wall (22; 122);
• two bottom walls (41; 121, 140) each positioned at one end of the side wall,
**characterized in that** the storage assembly further comprises at least one electrically conductive intermediate connection part (50) intended to be arranged between the capacitive element and one of the bottom walls (41; 140), said intermediate connection part (50; 150) having a covering plate (51; 151) intended to cover the end of the capacitive element (20), said covering plate (51; 151) including at least one vent (53; 153) for the passing of a fluid, the covering plate (51; 151) being secured to the capacitive element on the one side and to the envelope on the other side so that it is in electrical contact with the capacitive element and the envelope, the intermediate connection part being in contact with the envelope in securing regions in which the deformation of the bottom wall relative to the intermediate connection part is minimum.

2. The storage assembly according to the preceding claim wherein the intermediate connection part (50; 150) is devoid of securing regions in the central part of the covering plate (51; 151).

3. The storage assembly according to one of claims 1 or 2, wherein said securing regions comprise a surface extending on the periphery of the covering plate (51) of the intermediate connection part.

4. The storage assembly according to claim 3 wherein the intermediate connection part (50; 150) also comprises a peripheral border (52; 152) extending on the periphery of the covering plate, said peripheral border being intended partly to cover the side wall (22; 122), the securing regions comprising a surface extending over the peripheral border of the intermediate connection part.

5. The energy storage assembly according to any of claims 1 to 4 wherein the intermediate connection part (50; 150) is secured to the envelope (40) by gluing or welding.

6. The storage assembly according to any of claims 1 to 5 wherein the envelope comprises a tubular element (20; 120) forming the side wall and at least one cover (40; 140) placed at one end of the tubular element, the cover comprising a covering wall (41; 140) intended to cover the end of the tubular element and forming a bottom wall of the envelope.

7. The storage assembly according to claim 6 wherein the intermediate connection part is arranged so that the covering plate (51; 151) extends parallel to a plane along which the covering wall (41; 140) of the cover extends, the intermediate connection part being connected to the cover and to the tubular element in securing regions in which the deformation of the covering wall (41; 140) of the cover relative to the intermediate connection part is minimum, and preferably being in electrical contact with the cover.

8. The storage assembly according to any of claims 6 or 7 wherein the tubular element (120) comprises a base (121) closing the side wall at one of its ends and forming a bottom wall, the cover (140) being placed at the other of its ends.

9. The storage assembly according to claim 8 wherein the intermediate connection part is arranged inside the side wall of the envelope, the covering plate extending parallel to a plane along which the base extends, the securing regions of the intermediate connection part preferably comprising a surface located on the peripheral border and connected to an inner surface of the side wall.

10. The storage assembly according to any of claims 6 to 9 wherein at least one cover comprises a peripheral skirt (42) intended partly to surround the side wall of the tubular element.

11. The storage assembly according to claim 10 wherein the intermediate connection part is arranged so that its peripheral border (52) is positioned between said wall (22) and the peripheral skirt (52), the securing regions of the intermediate connection part preferably comprising a surface located on the peripheral border and connected to an inner surface of the skirt of the cover and/or to an outer surface of the side wall.

12. The storage assembly according to any of claims 6 to 11 wherein at least one cover (140) comprises a covering wall sized to have smaller dimensions than the end of the side wall (122) so that it can be pressed into the envelope, the intermediate connection part (150) being arranged so that its covering plate extends parallel to the covering wall of the cover, and so that its peripheral border is positioned between an edge of the cover extending perpendicular to the covering wall (140) and the side wall (122) of the envelope, the securing regions of the intermediate connection part (150) preferably comprising a surface located on the peripheral border of the connection part.

13. The storage assembly according to any of claims 1 to 12 comprising two intermediate connection parts (50) each positioned at one end of the capacitive element (30).

14. The storage assembly according to any of claims 1 to 12 wherein one of the bottom walls (140) has a narrower thickness than the other of the bottom walls (121), the intermediate connection part being positioned between the capacitive element and said bottom wall of narrower thickness.

15. The storage assembly according to any of the preceding claims wherein at least one vent (53; 153) consists of a through opening.

16. The energy storage assembly according to any of the preceding claims wherein the intermediate connection part comprises at least one projection (54) extending outwardly perpendicular to the covering plate (51) and in the same direction as the peripheral border, this projection preferably being intended to be embedded in the capacitive element.

17. A method for assembling an electrical energy storage assembly comprising an envelope having a so-called side wall (22) and two bottom walls each positioned at one end of the side wall, and a capacitive element intended to be contained in the envelope,
**characterized in that** the method comprises at least the following steps:
- first positioning (200) an electrically conductive intermediate connection part (50) on the capacitive element, the intermediate connection part (50) comprising a covering plate (51) including at least one vent (53) for the passing of a fluid, the intermediate connection part being positioned so that the covering plate (51) covers the end of the capacitive element, then joining the covering plate to the capacitive element in particular by welding;
- secondly positioning (300) a part of the envelope comprising a bottom wall of the envelope, in particular a cover (40) on the intermediate connection part (50) and joining the intermediate connection part to the part of envelope so as to allow deformation of the bottom wall (40) relative to the intermediate connection part, in particular by gluing, brazing or welding,
these steps being performed so that the intermediate connection part is placed between the capacitive element and the bottom wall.

18. A module comprising a casing in which there are arranged at least two electrical energy storage assemblies according to one of claims 1 to 16.
